# EUROPEAN PATENT APPLICATION

(11) **EP 4 794 111 A1**
(43) Date of publication of application: **19.08.2026**
(21) Application number: 24888007.2
(22) Date of filing: 06.11.2024
(51) Int. Cl.: H01M 50/593, H01M 50/588

(54) **BATTERY AND ELECTRIC DEVICE**

(30) Priority: 08.11.2023 CN 202323012774 U
(71) Applicant: Contemporary Amperex Technology Co., Limited, Ningde, Fujian 352100 (CN)
(72) Inventor: WU, Shaoji, Ningde, Fujian 352100 (CN); SHEN, Dan, Ningde, Fujian 352100 (CN); LI, Cong, Ningde, Fujian 352100 (CN); LIU, Shuangxu, Ningde, Fujian 352100 (CN)
(74) Representative: Ran, Handong
(86) International application number: PCT/CN2024/130248
(87) International publication number: WO 2025/098396

(57) **Abstract**

A battery (100) and an electric device. The battery (100) comprises: a battery pack (10), comprising a first battery column (11) and a second battery column (12), which are arranged in a first direction (X), wherein the first battery column (11) and the second battery column (12) each comprise a plurality of battery cells (200) sequentially arranged in a second direction (Y), the first direction (X) intersecting the second direction (Y); a busbar assembly (20), comprising a first busbar member (21) and a second busbar member (22), wherein the first busbar member (21) is connected to the battery cells (200) of the first battery column (11), and the second busbar member (22) is connected to the battery cells (200) of the second battery column (12); and a separator (30), wherein in the first direction (X), at least part of the separator (30) is located between the first busbar member (21) and the second busbar member (22). The battery can improve its own reliability, thus reducing the risk of short circuits.

## Description

### CROSS-REFERENCE TO RELATED APPLICATIONS

The present application claims priority to Chinese Patent Application No. 202323012774.X, filed on November 08, 2023, entitled "BATTERY AND ELECTRICAL APPARATUS", the entire content of which is incorporated herein by reference.

### TECHNICAL FIELD

The present application relates to the field of batteries, and in particular to a battery and an electrical apparatus.

### BACKGROUND

With the development of new energy technologies, batteries are more and more widely used, such as used in mobile phones, laptops, battery vehicles, electric vehicles, electric aircraft, electric ships, electric toy cars, electric toy ships, electric toy airplanes and power tools.

The development of battery technology needs to consider multiple design factors simultaneously. For example, how to improve the reliability of batteries is an important research direction in the field of batteries.

### SUMMARY OF THE INVENTION

The present application provides a battery and an electrical apparatus. The battery therein can reduce a risk of short circuit and improve the reliability.

In a first aspect, the present application provides a battery, including a battery group, a busbar assembly, and an isolation member. The battery group includes a first battery row and a second battery row arranged along a first direction, where the first battery row and the second battery row each includes a plurality of battery cells arranged sequentially along a second direction, the first direction intersecting the second direction; the busbar assembly includes a first busbar and a second busbar, where the first busbar is connected to the battery cells of the first battery row, and the second busbar is connected to the battery cells of the second battery row; and in the first direction, at least a portion of the isolation member is located between the first busbar and the second busbar.

In the technical solution of embodiments of the present application, the battery includes the battery group, the busbar assembly, and the isolation member, where the battery group includes a plurality of battery rows, each battery row including a plurality of battery cells arranged sequentially along the same direction and busbars connected between the battery cells. By arranging the isolation member between the busbars of different battery rows, a reliable physical separation effect can be formed, thereby increasing a creepage distance, reducing the possibility of short-circuit arcing, and consequently improving the reliability of the battery.

According to some of the embodiments of the present application, the first busbar is disposed on a side of the first battery row along a third direction, and the second busbar is disposed on a side of the second battery row along the third direction, the first direction, the second direction, and the third direction being perpendicular to each other; and in the third direction, the isolation member protrudes beyond a surface of the first busbar facing away from the first battery row and a surface of the second busbar facing away from the second battery row. By providing the isolation member in a protruding manner, the protection effect against short circuits can be further enhanced.

According to some of the embodiments of the present application, in the third direction, a dimension by which the isolation member protrudes beyond the busbar assembly is 1 mm to 3 mm. By making the isolation member protrude by a certain dimension, the protection effect is enhanced and interference with a top cover is prevented.

According to some of the embodiments of the present application, in the third direction, a dimension of the isolation member is greater than or equal to 5 mm. It is adapted to the aforementioned protrusion dimension of the isolation member.

According to some of the embodiments of the present application, the busbar assembly further includes a third busbar, the third busbar connecting at least one of the battery cells in the first battery row and at least one of the battery cells in the second battery row; and along the third direction, an orthographic projection of the isolation member does not overlap with an orthographic projection of the third busbar; or a surface of the isolation member proximate to the battery group has a recessed portion that is recessed in a direction away from the battery group, and the third busbar passes through the recessed portion. The third busbar connected between two adjacent battery rows is staggered from the isolation member, allowing for avoidance design through different approaches.

According to some of the embodiments of the present application, the battery further includes a protective plate, the protective plate being located on a side of the battery group along a third direction, where the first direction, the second direction, and the third direction are perpendicular to each other; and in the third direction, the first busbar is located between the first battery row and the protective plate, and the second busbar is located between the second battery row and the protective plate. The protective plate can provide protection for an top plate of the entire battery, preventing damage to the top plate, while further partitioning the space where the battery rows are located.

According to some of the embodiments of the present application, the protective plate has an accommodating hole penetrating through therein along the third direction, the accommodating hole extending along the second direction, and at least a portion of the isolation member extending into the accommodating hole. The protective plate and the isolation member engage with each other to further enhance the effect of isolating adjacent battery rows.

According to some of the embodiments of the present application, along the third direction, an orthographic projection of the isolation member is located within an orthographic projection of the accommodating hole. It allows the protective plate to have space for movement relative to the isolation member.

According to some of the embodiments of the present application, a maximum spacing distance between a hole wall of the accommodating hole and the isolation member is less than or equal to 3 mm. By reducing an assembly gap between the accommodating hole and the isolation member, the sealing performance is further improved.

According to some of the embodiments of the present application, the protective plate is movably connected to the battery group along the third direction. It allows the protective plate to lift upward upon impact, facilitating gas venting.

According to some of the embodiments of the present application, the battery group further includes two end plates oppositely disposed along the second direction, the first battery row and the second battery row being disposed between the two end plates; and the end plates being movably connected to the protective plate. The end plates can be used to simultaneously secure the battery and define a movement trajectory and position of the protective plate.

In a second aspect, the present application provides an electrical apparatus, including the battery according to any one of the embodiments of the first aspect, the battery being configured to supply electrical energy.

### BRIEF DESCRIPTION OF THE DRAWINGS

By reading the detailed description of the preferred embodiments below, various other advantages and benefits will become apparent to those of ordinary skill in the art. The drawings are used for the purpose of illustrating the preferred embodiments only and are not to be considered a limitation to the present application. In addition, throughout the accompanying drawings, the same reference numeral is used to represent the same component. In the drawings:
FIG. 1 is a structural schematic diagram of a vehicle according to some embodiments of the present application;
FIG. 2 is an exploded view of a battery according to some embodiments of the present application;
FIG. 3 is a partial schematic structural diagram of a battery according to some embodiments of the present application;
FIG. 4 is an exploded view of the battery shown in FIG. 3;
FIG. 5 is a partial top-view schematic diagram of a battery according to some embodiments of the present application;
FIG. 6 is a partial top-view schematic diagram of a battery according to some other embodiments of the present application; and
FIG. 7 is a partial top-view schematic diagram of a battery according to still some other embodiments of the present application.

### Reference numerals:

1000 - vehicle;
100 - battery; 200 - battery cell; 300 - controller; 400 - motor; 500 - box;
10 - battery group; 20 - busbar assembly; 30 - isolation member; 40 - protective plate; 50 - end plate;
11 - first battery row; 12 - second battery row; 21 - first busbar; 22 - second busbar; 23 - third busbar; 41 - accommodating hole; 61 - first box portion; 62 - second box portion; 63 - accommodating portion;
X - first direction; Y - second direction; Z - third direction.

### DETAILED DESCRIPTION

The embodiments of the technical solutions of the present application will be described in detail below with reference to the accompanying drawings. The following embodiments are only used to illustrate the technical solutions of the present application more clearly, and thus are only interpreted as examples, rather than used to limit the scope of protection of the present application.

Unless otherwise defined, all technical and scientific terms used herein have the same meanings as those commonly understood by those skilled in the art of the present application. The terms used herein are intended only for the purpose of describing specific embodiments and are not intended to limit the present application. The terms "including" and "having" and any variations thereof in the specification and claims of the present application and in the description of the above accompanying drawings are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

The "embodiment" mentioned herein means that specific features, structures, or characteristics described with reference to the embodiment may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that there may be three relationships, for example A and/or B may represent three situations: A exists alone, both A and B exist, and B exists alone. Moreover, the character "/" herein generally indicates that the context objects are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise expressly specified and limited, the technical terms "mount," "connect," "connection," "fix", etc. should be understood in a broad sense, such as, a fixed connection, a detachable connection, or an integral connection; a mechanical connection, or an electrical connection; directly connect, indirectly connect through an intermediate medium, an internal communication of two elements, or interaction between two elements. For those of ordinary skill in the art, the specific meanings of the aforementioned terms in the embodiments of the present application can be understood according to specific situations.

In the embodiments of the present application, the battery cell may be a secondary battery cell. The secondary battery cell refers to a battery cell that, after being discharged, can activate an active material by charging for continued use.

The battery cell can be a lithium-ion battery cell, a sodium-ion battery cell, a sodium/lithium-ion battery cell, a lithium metal battery cell, a sodium metal battery cell, a lithium-sulfur battery cell, a magnesium-ion battery cell, a nickel-metal hydride battery cell, a nickel-cadmium battery cell, a lead storage battery cell, etc., which is not limited in the embodiments of the present application.

The battery cell generally includes an electrode assembly. The electrode assembly includes a positive electrode and a negative electrode. In the charging and discharging process of the battery cell, active ions (such as lithium ions) are intercalated and de-intercalated between the positive electrode and the negative electrode in a reciprocating manner.

In some implementations, the battery cell may include a shell. The shell is used to encapsulate components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch cell, or a battery cell in another shape. The prismatic battery cell includes a square-shell battery cell, a blade-shaped battery cell, and a multi-prism battery. For example, the multi-prism battery may be a hexagonal prism battery.

The battery mentioned in the embodiments of the present application refers to a single physical module including one or more battery cells to provide a higher voltage and capacity.

In some embodiments, the battery may be a battery module. When there are a plurality of battery cells, the plurality of battery cells are arranged and fixed to form a battery module.

In some examples, the battery may be a battery pack. The battery pack includes a box and a battery cell. The battery cell or the battery module is accommodated in the box.

In some embodiments, the box may serve as a part of a chassis structure of the vehicle. For example, a part of the box may become at least a part of a vehicle floor, or a part of the box may become at least a part of a cross beam and a longitudinal beam of a vehicle.

In some embodiments, the battery may be an energy storage apparatus. The energy storage apparatus includes an energy storage container, an energy storage electric cabinet, or the like.

In a battery, a plurality of battery cells are usually provided. These battery cells may be arranged in multiple rows or multiple columns, and the required electrical connections may be formed between the rows/columns via busbar components based on the distribution of battery cells in each row/column. Optionally, in terms of the electrical connection relationship, the battery cells may be connected end-to-end sequentially, forming an overall series connection relationship within the entire module.

In a battery, busbar components of two adjacent rows/two adjacent columns are closely spaced. Short-circuit problems are prone to occur between two busbar components that are relatively close and have a large voltage difference, especially in the case of battery thermal runaway, where the risk of short-circuit arcing between busbar components in adjacent rows/columns increases significantly, thereby increasing the risk of the entire battery module catching fire or exploding.

In view of this, embodiments of the present application provide a battery. A plurality of battery rows are provided in the battery, each of which is correspondingly provided with a busbar, where an isolation member is provided between adjacent battery rows. By arranging the isolation member between the busbars corresponding to different battery rows, a reliable physical barrier can be formed, thereby increasing the creepage distance, and reducing the risk of short-circuit arcing between the busbars, and consequently improving the reliability of the battery.

The technical solutions described in the embodiments of the present application are applicable to batteries and electrical apparatuses using batteries. The electrical apparatuses are, for example, mobile phones, portable devices, laptops, electric vehicles, electric automobiles, ships, spacecraft, electric toys, electric tools, and the like. The spacecraft are, for example, aircraft, rockets, space shuttles, spacecraft, and the like. The electric toys include, for example, stationary or mobile electric toys, specifically, for example, game consoles, electric toy cars, electric toy ships, electric toy aircraft, and the like. The electric tools include, for example, metal-cutting electric tools, grinding electric tools, assembly electric tools, and railway electric tools, specifically, for example, electric drills, electric grinders, electric wrenches, electric screwdrivers, electric hammers, impact drills, concrete vibrators, and electric planers.

The battery cells described in the embodiments of the present application are not limited to be applicable to the electrical apparatuses described above. However, for the sake of brevity, the following embodiments are all described by taking an electric vehicle as an example.

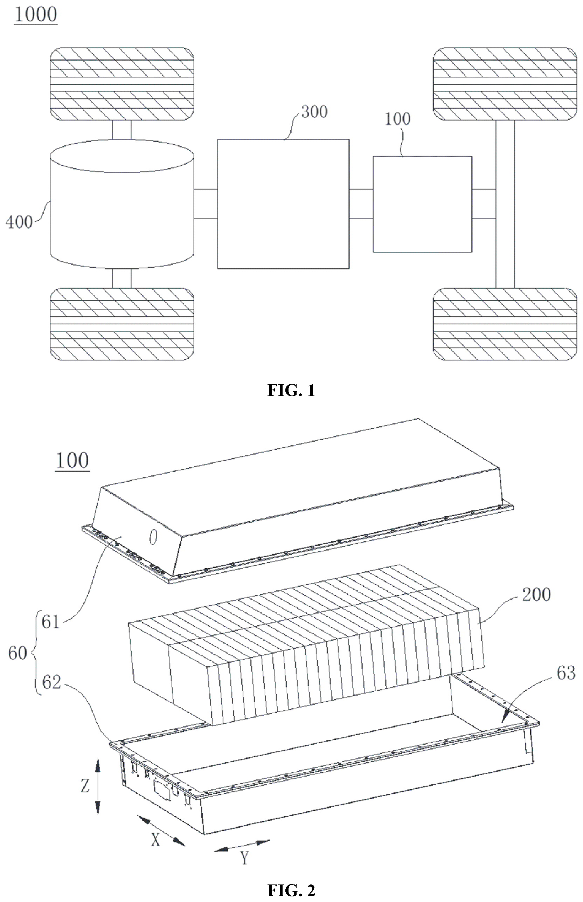

Referring to FIG. 1. FIG. 1 is a schematic structural diagram of a vehicle according to some embodiments of the present application. The vehicle 1000 may be a fuel vehicle, a gas vehicle, or a new-energy vehicle. The new-energy vehicle may be, e.g., an all-electric vehicle, a hybrid electric vehicle, or an extended range electric vehicle. A battery 100 may be arranged inside the vehicle 1000. Specifically, for example, the battery 100 may be arranged at the bottom or head or tail of the vehicle 1000. The battery 100 may be configured to supply power to the vehicle 1000. For example, the battery 100 may be used as an operating power source of the vehicle 1000. The vehicle 1000 may further include a controller 300 and a motor 400. For example, the controller 300 is configured to control the battery to supply power to the motor 400. The battery may be used for starting and navigating the vehicle 1000. Certainly, the battery 100 may also be configured to drive the vehicle 1000 to run, and replacing or partially replacing fuel or natural gas to provide drive for the vehicle 1000.

FIG. 2 is an exploded view of a battery according to some embodiments of the present application. As shown in FIG. 2, the battery 100 includes a box 500 and a battery cell 200, the battery cell 200 being accommodated in the box 500.

The box 500 is configured to accommodate the battery cell 200, and the box 500 may be of a variety of structures. In some embodiments, the box 500 may include a first box portion 61 and a second box portion 62, the first box portion 61 and the second box portion 62 covering each other and the first box portion 61 and the second box portion 62 together defining an accommodating portion 63 for accommodating the battery cell 200. The second box portion 62 may be of a hollow structure with one end open, the first box portion 61 is of a plate-like structure, and the first box portion 61 covers the open side of the second box portion 62 to form the box having the accommodating portion 63; and each of the first box portion 61 and the second box portion 62 may also be of a hollow structure with one side open, and the open side of the first box portion 61 covers the open side of the second box portion 62 to form the box 500 having the accommodating portion 63. Certainly, the first box portion 61 and the second box portion 62 can be of various shapes, such as a cylinder or a cuboid.

In the battery 100, there may be a plurality of battery cells 200, and the plurality of battery cells 200 may be connected in series, in parallel, or in parallel-series connection, where the parallel-series connection means that the plurality of battery cells 200 are connected in both series and parallel. The plurality of battery cells 200 may be directly connected together in series, in parallel, or in parallel-series connection, and then the whole composed of the plurality of battery cells 200 may be accommodated in the box 500; and certainly, the plurality of battery cells 200 may be connected in series, in parallel, or in parallel-series connection to form a battery module first, then a plurality of battery modules may be connected in series, in parallel, or in parallel-series connection to form a whole, and accommodated in the box 500.

In some embodiments, there are a plurality of battery cells 200. The plurality of battery cells 200 are first connected in series, in parallel, or in parallel-series connection to form a battery module. A plurality of battery modules are then connected in series, in parallel, or in parallel-series connection to form an integral whole, which is accommodated within the box 500.

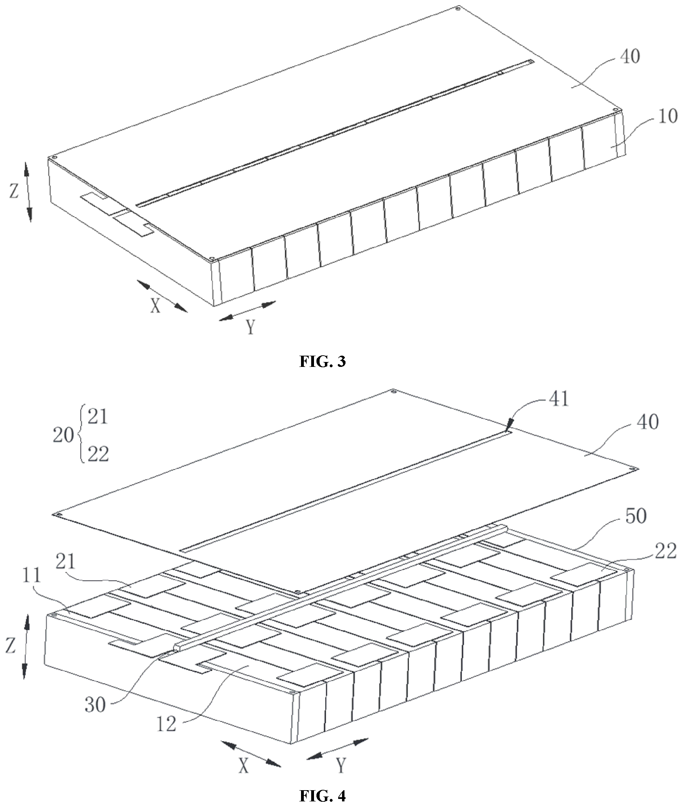

The structure of the battery 100 and the electrical apparatus will be described below with reference to FIG. 3 to FIG. 7.

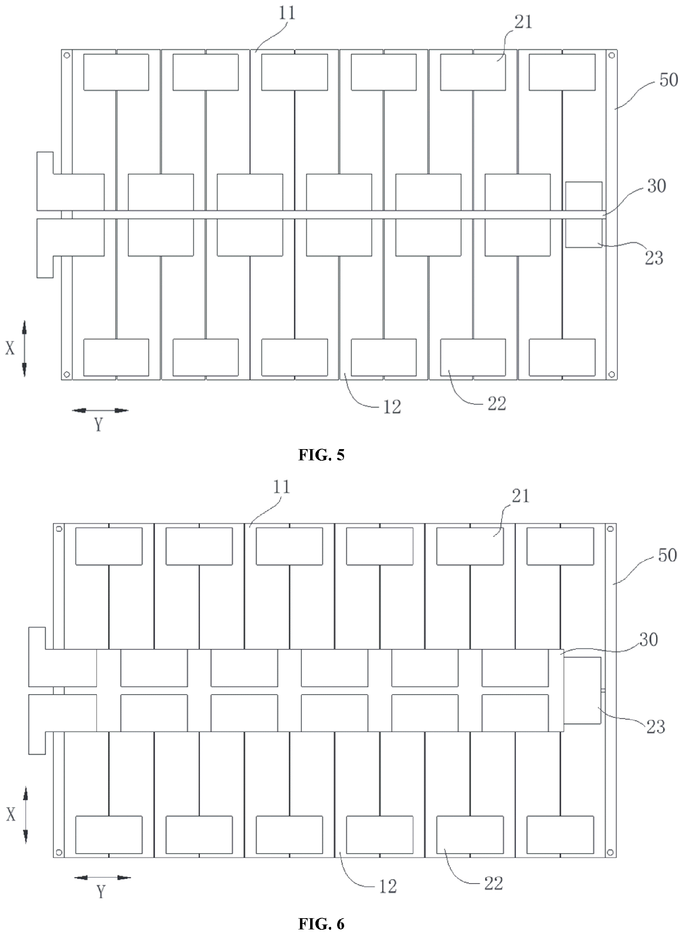

Please refer to FIG. 3 to FIG. 6 collectively. FIG. 3 is a partial schematic structural diagram of a battery according to some embodiments of the present application, FIG. 4 is an exploded view of the battery shown in FIG. 3, FIG. 5 is a partial top-view schematic diagram of a battery according to some embodiments of the present application, and FIG. 6 is a partial top-view schematic diagram of a battery according to some other embodiments of the present application.

In a first aspect, embodiments of the present application provide a battery 100, including a battery group 10, a busbar assembly 20, and an isolation member 30. The battery group 10 includes a first battery row 11 and a second battery row 12 arranged along a first direction X, where the first battery row 11 and the second battery row 12 each includes a plurality of battery cells 200 arranged sequentially along a second direction Y, the first direction X intersecting the second direction Y; the busbar assembly 20 includes a first busbar 21 and a second busbar 22, where the first busbar 21 is connected to the battery cells 200 of the first battery row 11, and the second busbar 22 is connected to the battery cells 200 of the second battery row 12; and in the first direction X, at least a portion of the isolation member 30 is located between the first busbar 21 and the second busbar 22.

The embodiments of the present application provide a battery 100, including a battery group 10 for storing/releasing electrical energy, a busbar assembly 20 for achieving electrical connections within the battery group 10 and between the battery group 10 and other components, and an isolation member 30 providing short-circuit prevention and isolation functionality. Specifically, the battery group 10 includes the first battery row 11 and the second battery row 12. The two battery rows are arranged sequentially along the first direction X and may be disposed adjacent to or in contact with each other. Both the first battery row 11 and the second battery row 12 are provided with a plurality of battery cells 200 arranged sequentially along the second direction Y, and the battery cells 200 in the two battery rows may have identical parameters and quantities. The first direction X intersects the second direction Y. Optionally, the first direction X and the second direction Y may be perpendicular to each other.

The busbar assembly 20 includes a first busbar 21 for connection between the respective battery cells 200 in the first battery row 11 and a second busbar 22 for connection between the respective battery cells 200 in the second battery row 12. The quantities and dimensions of the first busbars 21 and the second busbars 22 may be matched to those of the battery cells 200 to which they are connected. In embodiments where the battery cells 200 in the first battery row 11 and the second battery row 12 are identical, the shape and dimensions of the first busbars 21 and the second busbars 22 may be the same. The busbar assembly 20 may be a copper foil.

It can be understood that the battery group 10 may include a plurality of battery rows, which means that the number of battery rows may be more than two. These battery rows may all be arranged along the first direction X and may be disposed in contact with each other or disposed at equal intervals. The number of battery cells 200 in each battery row may be the same or similar. Correspondingly, the busbar assembly 20 may be provided with more than two types of busbars, and the arrangement positions and communication manners of the busbars in each battery row may be the same or similar to achieve uniform and good connection effects.

The isolation member 30 is disposed on the same side of the battery group 10 as the busbar assembly 20, and at least a portion of this isolation member 30 is disposed between the adjacent first busbar 21 and second busbar 22, serving to increase the creepage distance between them and reduce the risk of short circuit. To ensure that the isolation member 30 can still provide the corresponding short-circuit prevention function in the event of battery thermal runaway, the isolation member 30 may be made of a material that is heat-resistant and can maintain insulation effectiveness under high-temperature conditions. As an example, materials such as silicone rubber that can withstand temperatures of 400°C-500°C may be selected.

Optionally, the isolation member 30 may be strip-shaped, extending along the second direction Y with a constant width throughout, and its dimension in its own extension direction may be the same as or similar to that of the battery row. That is, the isolation member 30 is arranged to extend in an uninterrupted manner, thereby improving the short-circuit prevention effect. On this basis, the isolation member 30, based on the strip-shaped member extending along the second direction Y, may also have an extension portion protruding outward along the first direction X. This extension portion may extend between adjacent first busbars 21 or adjacent second busbars 22 to further enhance the reliability of isolation.

Alternatively, the isolation member 30 may also include a plurality of sub-isolation portions arranged at intervals. These sub-isolation portions may be arranged sequentially along the second direction Y and in one-to-one correspondence with each aforementioned pair of adjacent busbars. That is, a sub-isolation portion may be disposed between each pair of closely spaced first busbar 21 and second busbar 22, thereby reducing manufacturing costs.

In the battery 100 provided in the embodiments of the present application, different battery columns are provided with different busbars, and insulating members 30 made of insulating material are provided at positions where the different busbars are relatively closely spaced. This can achieve a reliable physical separation and insulation effect, thereby increasing the creepage distance between the different busbars, reducing the possibility of short-circuit arcing, and thus improving the reliability of the battery.

In some optional embodiments, the first busbar 21 is disposed on a side of the first battery row 11 along a third direction Z, and the second busbar 22 is disposed on a side of the second battery row 12 along the third direction Z, the first direction X, the second direction Y, and the third direction Z being perpendicular to each other; and in the third direction Z, the isolation member 30 protrudes beyond a surface of the first busbar 21 facing away from the first battery row 11 and a surface of the second busbar 22 facing away from the second battery row 12.

The battery group 10 in the embodiments of the present application includes two battery rows. The respective battery cells 200 in each battery row are connected via the corresponding busbar assembly 20. On this basis, the first busbar 21, the second busbar 22, and the isolation member 30 may be disposed on the same side of the battery group 10 along the third direction Z. Based on this, in the third direction Z, a surface of the isolation member 30 facing away from the battery group 10 may protrude beyond a surface of the busbar assembly 20 facing away from the battery group 10.

Specifically, the first busbar 21 and the second busbar 22 in the busbar assembly 20 are each connected between the battery cells 200 within a different battery row. The heights of the surfaces of the two types of busbars facing away from the battery group 10 may be the same or different. In this case, the isolation member 30 should protrude beyond both types of busbars simultaneously. In embodiments where the battery group 10 includes three or more battery rows, an isolation member 30 may be disposed between every two adjacently arranged battery rows. Each isolation member 30 may protrude, in the third direction Z, beyond the busbars on both sides of the isolation member itself. Depending on the heights of the outer surfaces of the busbars, the dimension of the isolation member 30 in the third direction Z may vary correspondingly to adaptively form a barrier between the busbars.

By adjusting the extension dimension of the isolation member 30 in the third direction Z, the isolation member 30 can be made to protrude relative to the busbars it insulates and separates, thereby further increasing the creepage distance between the busbars and improving the protection effect against short circuits.

In some optional embodiments, in the third direction Z, a dimension by which the isolation member 30 protrudes beyond the busbar assembly 20 is 1 mm-3 mm.

As mentioned previously, the isolation member 30 may protrude beyond the busbars to improve the barrier effect. On this basis, the dimension of protrusion of the isolation member 30 may be 1 mm-3 mm. It can be understood that the dimension of protrusion of the isolation member 30 refers to the minimum value of the spacing distances, in the third direction Z, between the surface of the isolation member 30 facing away from the battery group 10 and the surfaces of the busbars on both sides facing away from the battery group 10.

Furthermore, the specific protrusion dimension of the isolation member 30 may be selected based on parameters such as the size of the internal space of the battery 100 and the dimension of the busbar assembly 20 in the third direction Z. Optionally, taking as an example that the surfaces of the plurality of first busbars 21 facing away from the battery group 10 are not at the same height, various portions of the isolation member 30 along the second direction Y may be located at different height positions in the third direction Z, such that the spacing distances between it and the first busbars 21 remain the same.

A top cover may be provided in the battery 100. This top cover is located on the side of the isolation member 30 facing away from the battery group 10, serving to create the sealed environment within the battery 100 and provide protective functions. Based on this, by making the isolation member 30 protrude by a certain dimension, it is possible to improve the protection effect against short circuits while reducing the possibility of interference between the isolation member 30 and the top cover, achieving a good short-circuit prevention effect within a certain thickness dimension.

In some optional embodiments, in the third direction Z, a dimension of the isolation member 30 is greater than or equal to 5 mm.

The isolation member 30 in the embodiments of the present application may abut against a surface of the battery group 10. Alternatively, the isolation member 30 may at least partially extend between adjacent battery rows. On the basis that the isolation member 30 protrudes beyond the adjacent busbar assembly 20, the overall dimension of the isolation member 30 may be adjusted correspondingly according to the dimension of protrusion of the isolation member 30, allowing it to adapt to the extension dimension of the busbar assembly 20 in the third direction Z. To enable the isolation member 30 to have a sufficient protrusion dimension, its overall extension dimension in the third direction Z may be greater than or equal to 5 mm.

By adjusting the overall dimension of the isolation member 30, it can be made to adapt to the height dimension of the busbar assembly 20, such that the dimensional difference between them in the third direction Z conforms to the aforementioned numerical range.

In some optional embodiments, the busbar assembly 20 further includes a third busbar 23, the third busbar 23 connecting at least one of the battery cells 200 in the first battery row 11 and at least one of the battery cells 200 in the second battery row 12; and along the third direction Z, an orthographic projection of the isolation member 30 does not overlap with an orthographic projection of the third busbar 23; or a surface of the isolation member 30 proximate to the battery group 10 has a recessed portion that is recessed in a direction away from the battery group 10, and the third busbar 23 passes through the recessed portion.

The battery group 10 in the embodiments of the present application includes the first battery row 11 and the second battery row 12. The first busbar 21 and the second busbar 22 are correspondingly provided in the two battery rows, respectively. These two types of busbars correspondingly achieve electrical connections between the respective battery cells 200 within the two battery rows. On this basis, the two battery rows may be connected in series. Specifically, along the second direction Y, one end of the battery group 10 may be provided with two output electrodes for external connection of the battery group 10. Simultaneously, the other end may be provided with a third busbar 23 forming an electrical connection between two adjacent battery rows, such that the two battery rows are connected end-to-end in series, forming a battery group 10 that is in U-shaped communication.

Furthermore, to ensure smooth connection at the third busbar 23, the isolation member 30 and the third busbar 23 may be staggered from each other. Optionally, the extension dimension of the isolation member 30 in the second direction Y may be adjusted such that it is staggered from the section where the third busbar 23 is disposed. Along the second direction Y, the sum of the extension dimension of the isolation member 30 and the extension dimension of the third busbar 23 may be the same as or similar to the dimension of the battery group 10, thereby forming avoidance.

Alternatively, at least one of the isolation member 30 or the third busbar 23 may be provided with a recessed portion that is recessed in a direction away from each other, and the other may pass through the recessed portion. Taking the isolation member 30 being provided with the recessed portion as an example, the surface of the isolation member 30 proximate to the battery group 10 may be provided, at a position corresponding to the third busbar 23, with a recessed portion that is recessed in the third direction Z, i.e., forming a through hole penetrating through therein along the first direction X, and allowing the third busbar 23 to pass through the through hole, such that the third busbar 23 and the isolation member 30 do not contact each other. Alternatively, a region at the middle portion of the third busbar 23 that is disposed in correspondence with the isolation member 30 may form a recessed portion in a direction towards the battery group 10, and the isolation member 30 may pass through this recessed portion.

By arranging the isolation member 30 and the third busbar 23 to be spaced apart from each other, it is possible to improve the short-circuit prevention reliability between the first and second busbars while enabling the third busbar 23 to successfully achieve electrical connection.

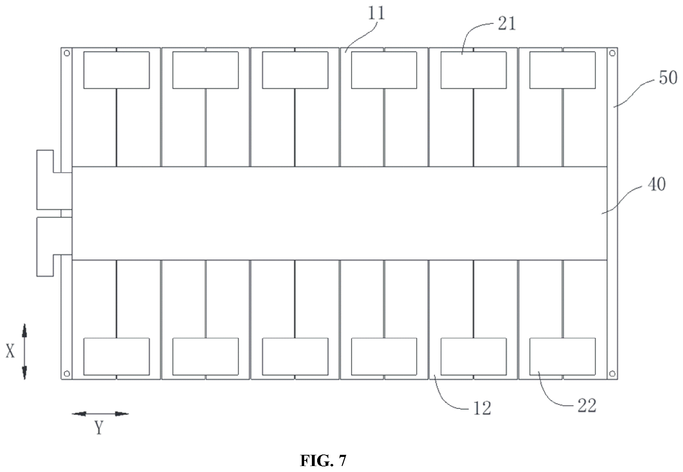

Please refer to FIG. 7. FIG. 7 is a partial top-view schematic diagram of a battery according to still some other embodiments of the present application. In some optional embodiments, the battery 100 further includes a protective plate 40, the protective plate 40 being located on a side of the battery group 10 along a third direction Z, where the first direction X, the second direction Y, and the third direction Z are perpendicular to each other; and in the third direction Z, the first busbar 21 is located between the first battery row 11 and the protective plate 40, and the second busbar 22 is located between the second battery row 12 and the protective plate 40.

The battery 100 in the embodiments of the present application may further be provided with a protective plate 40. This protective plate 40 is disposed on a side of the busbar assembly 20 facing away from the battery group 10, serving to improve protection in the third direction Z and further enhance the short-circuit prevention effect. Specifically, an orthographic projection of the protective plate 40 along the third direction Z may cover at least a portion of the battery group 10. The protective plate 40 may be made of a heat-resistant and impact-resistant material, such as mica or other materials that can withstand high temperatures above 1000°C and have relatively high strength.

Optionally, the orthographic projection of the protective plate 40 along the third direction Z may cover the entire battery group 10. In this case, the shape of the protective plate 40 may be the same as the overall shape of the battery group 10, for example, rectangular, circular, elliptical, or racetrack-shaped. The busbar assembly 20 is disposed between the protective plate 40 and the battery group 10. In this case, the busbar components 20 may be spaced apart from the protective plate 40. In embodiments where the isolation member 30 is provided to protrude beyond the busbar assembly 20, the isolation member 30 may abut against the protective plate 40, or the isolation member 30 and the protective plate 40 may be staggered from each other.

By providing the protective plate 40 in the battery 100, the top plate in the battery 100 can be protected. When issues such as thermal runaway occur in the battery group 10, it can block high-temperature and high-pressure airflow and metal particles ejected from the battery group 10. Utilizing its own heat-resistant and impact-resistant properties, it provides protection for the top plate of the battery 100, preventing damage to the top plate.

In some optional embodiments, the protective plate 40 has an accommodating hole 41 penetrating through therein along the third direction Z, the accommodating hole 41 extending along the second direction Y, and at least a portion of the isolation member 30 extending into the accommodating hole 41.

The protective plate 40 in the embodiments of the present application may function independently of the isolation member 30. Alternatively, the protective plate 40 may be provided with the accommodating hole 41, and the isolation member 30 may extend out through the accommodating hole 41, causing the protective plate 40 and the isolation member 30 to engage with each other to jointly partition space.

Specifically, in embodiments where the protective plate 40 is provided with the accommodating hole 41, this accommodating hole 41 may penetrate through the protective plate 40 along the third direction Z, and its extension direction may be the same as the extension direction of the isolation member 30 to facilitate engagement with the isolation member 30. In an embodiment where the isolation member 30 extends along the second direction Y, an extension dimension, in that direction, of the portion of the isolation member 30 that extends into the accommodating hole 41 may be the same as an overall extension dimension of the isolation member 30. That is, all parts of the isolation member 30 can extend into the accommodating hole 41 to ensure tight engagement between the two.

Furthermore, making the protective plate 40 engage with the isolation member 30 via the accommodating hole 41 enables, in a case where thermal runaway occurs in the battery group 10 and the protective plate 40 lifts upward, the first battery row 11 and the second battery row 12 to maintain a mutually isolated state. This causes metal particles and the like ejected from the two battery rows to be discharged in different directions, so as to reduce the possibility of the short-circuit arcing problem occurring between the first busbar 21 and the second busbar 22 due to the dispersion of metal particles, thereby further improving the reliability of the battery 100.

In some optional embodiments, along the third direction Z, an orthographic projection of the isolation member 30 is located within an orthographic projection of the accommodating hole 41.

In embodiments where at least a portion of the isolation member 30 extends into the accommodating hole 41, an orthographic projection of the isolation member 30 may be entirely located within the range of an orthographic projection of the accommodating hole 41. In this case, the shape of the orthographic projection of the accommodating hole 41 may be the same as the shape of the orthographic projection of the isolation member 30, and their areas may be similar, such that the protective plate 40 can move relative to the isolation member 30 along the third direction Z without interfering with the isolation member 30. In this case, the extension dimension of the accommodating hole 41 in the second direction Y may be set according to the dimension of the isolation member 30, enabling it to accommodate the entire isolation member 30 therein and enabling the isolation member 30 to extend into the accommodating hole 41 at all positions along the second direction Y, thereby further improving the reliability of isolation.

In some optional embodiments, a maximum spacing distance between a hole wall of the accommodating hole 41 and the isolation member 30 is less than or equal to 3 mm.

In embodiments where the isolation member 30 extends into the accommodating hole 41, a dimension of the accommodating hole 41 may be slightly larger than a dimension of the isolation member 30, causing the hole wall of the accommodating hole 41 and a side wall of the isolation member 30 to extend parallel to each other with a relatively small gap between them. When assembling the components, a certain tolerance space may be reserved. Under the premise of providing a tolerance space, the gap between the hole wall of the accommodating hole 41 and the isolation member 30 should be reduced. Specifically, it may be less than or equal to 3 mm.

By reducing the assembly gap between the accommodating hole 41 and the isolation member 30, the sealing at the accommodating hole 41 can be improved, further reducing the impact of high-temperature and high-pressure gas and metal particles ejected from the battery group 10 on the top plate.

In some optional embodiments, the protective plate 40 is movably connected to the battery group 10 along the third direction Z.

The protective plate 40 in the embodiments of the present application may move relative to the battery group 10 along the third direction Z. Specifically, a movable connection arrangement form may be adopted between the protective plate 40 and the battery group 10, for example, a sliding connection, a rotating connection, etc., enabling the protective plate 40 to move relative to the battery group 10 along a preset trajectory.

Furthermore, when a thermal runaway problem occurs in the battery group 10, the battery cells 200 therein may eject high-temperature and high-pressure gas and metal particles, and the like outward. These substances impact the protective plate 40 above, causing it to lift upward. Thereby, the impact on the top plate of the battery 100 can be further reduced by pushing the heavier and harder protective plate 40. Simultaneously, the upwardly lifting protective plate 40 facilitates gas venting to the periphery of the battery group 10, reducing the risk of fire and explosion, and further improving the reliability of the battery 100.

In some optional embodiments, the battery group 10 further includes two end plates 50 oppositely disposed along the second direction Y, the first battery row 11 and the second battery row 12 being disposed between the two end plates 50; and the end plates 50 being movably connected to the protective plate 40.

The battery group 10 in the embodiments of the present application may further include end plates 50. The end plates 50 may be provided in pairs and respectively clamp the respective battery rows from two opposite sides along the second direction Y. The two end plates 50 may have the same shape and thickness, and their orthographic projections along the second direction Y may cover the respective battery rows. Meanwhile, the shapes of the end plates 50 may match the shape of the sum of the orthographic projections of the respective battery rows along the second direction Y. The end plates 50 can clamp the first and second battery rows from both sides to secure the plurality of battery cells 200 therein. In this case, end faces on two opposite sides of each battery row along the second direction Y may be planar to facilitate mutual abutment.

Optionally, taking the battery 100 being applied to a vehicle 1000 as an example, the end plates 50 may be connected to support beams in a battery pack. The support beams may be further connected to structures such as a vehicle body frame that can provide support and fixation functions. Thereby, the first and second battery rows can be secured at preset installation positions by correspondingly adjusting the arrangement positions and structure of the end plates 50.

Furthermore, the end plates 50 and the protective plate 40 are arranged to be movably connected to each other. When connected, the protective plate 40 should be able to move relative to the end plates 50 along a preset trajectory. Optionally, this preset movement trajectory may be a linear trajectory extending along the third direction Z. The end plates 50 and the protective plate 40 may each be provided with a guide hole extending along the third direction Z, and a guide post may be passed through the guide holes provided on both, such that the protective plate 40 can move along the extension direction of the guide post. Optionally, a distance over which the protective plate 40 can move may be limited by a spacing between the top plate of the battery 100 and the protective plate 40. Alternatively, the movement of the protective plate 40 may be limited by structures such as a protruding section or a lock nut provided at an end of the guide post away from the end plate 50.

The end plates 50 in the embodiments of the present application can, while securing the battery group 10, assist in defining the movement trajectory and position of the protective plate 40. This ensures that when the protective plate 40 is impacted and lifted upward during thermal runaway, it can be lifted upward linearly along the third direction Z, reducing the possibility of tilting or deviation, thereby further improving the protection reliability of the protective plate 40.

In a second aspect, the present application provides an electrical apparatus, including the battery 100 according to any one of the embodiments of the first aspect, the battery 100 being configured to supply electrical energy.

The electrical apparatus provided in the embodiments of the present application has all the beneficial effects of the battery 100 according to any one of the embodiments of the aforementioned first aspect. For details, reference may be made to the specific descriptions of the battery 100 in the aforementioned various embodiments, which will not be repeated here in this embodiment.

Embodiments of the present application provide a battery 100, including a battery group 10, a busbar assembly 20, an isolation member 30, and a protective plate 40. The battery group 10 includes a first battery row 11 and a second battery row 12 arranged sequentially along a first direction X, and end plates 50 clamping the battery rows from two opposite sides along a second direction Y. The busbar assembly 20 includes a first busbar 21 provided in correspondence with the first battery row 11, a second busbar 22 provided in correspondence with the second battery row 12, and a third busbar 23 connected between the first battery row 11 and the second battery row 12. The isolation member 30 extends along the second direction Y and is interposed between the first busbar 21 and the second busbar 22. The isolation member 30 and the third busbar 23 are staggered from each other. The protective plate 40 is disposed on a side of the busbar assembly 20 facing away from the battery group 10 and is movably connected to the end plates 50. The protective plate 40 has an accommodating hole 41, and at least a portion of the isolation member 30 extends into the accommodating hole 41.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments may still be modified, or some or all of the technical features therein may be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A battery, comprising:
a battery group comprising a first battery row and a second battery row arranged along a first direction, wherein the first battery row and the second battery row each comprise a plurality of battery cells arranged sequentially along a second direction, the first direction intersecting the second direction;
a busbar assembly comprising a first busbar and a second busbar, wherein the first busbar is connected to the battery cells of the first battery row, and the second busbar is connected to the battery cells of the second battery row; and
an isolation member, wherein in the first direction, at least a portion of the isolation member is located between the first busbar and the second busbar.

2. The battery according to claim 1, wherein:
the first busbar is disposed on a side of the first battery row along a third direction, and the second busbar is disposed on a side of the second battery row along the third direction, wherein the first direction, the second direction, and the third direction are perpendicular to each other; and
in the third direction, the isolation member protrudes beyond a surface of the first busbar facing away from the first battery row and a surface of the second busbar facing away from the second battery row.

3. The battery according to claim 2, wherein in the third direction, the isolation member protrudes beyond the busbar assembly by 1 mm to 3 mm.

4. The battery according to any one of claims 2 to 3, wherein in the third direction, a dimension of the isolation member is greater than or equal to 5 mm.

5. The battery according to any one of claims 1 to 4, wherein:
the busbar assembly further comprises a third busbar, the third busbar connecting at least one of the battery cells in the first battery row and at least one of the battery cells in the second battery row; and
along the third direction, an orthographic projection of the isolation member does not overlap with an orthographic projection of the third busbar; or a surface of the isolation member proximate to the battery group has a recessed portion that is recessed in a direction away from the battery group, and the third busbar passes through the recessed portion.

6. The battery according to any one of claims 1 to 5, further comprising a protective plate, the protective plate being located on a side of the battery group along a third direction, wherein the first direction, the second direction, and the third direction are perpendicular to each other,
wherein in the third direction, the first busbar is located between the first battery row and the protective plate, and the second busbar is located between the second battery row and the protective plate.

7. The battery according to claim 6, wherein the protective plate has an accommodating hole penetrating therethrough along the third direction, the accommodating hole extending along the second direction, and at least a portion of the isolation member extending into the accommodating hole.

8. The battery according to claim 7, wherein along the third direction, an orthographic projection of the isolation member is located within an orthographic projection of the accommodating hole.

9. The battery according to any one of claims 7 to 8, wherein a maximum spacing distance between a hole wall of the accommodating hole and the isolation member is less than or equal to 3 mm.

10. The battery according to any one of claims 6 to 9, wherein the protective plate is movably connected to the battery group along the third direction.

11. The battery according to claim 10, further comprising two end plates oppositely disposed along the second direction, the battery group being disposed between the two end plates, and the end plates being movably connected to the protective plate.

12. An electrical apparatus, comprising the battery of any one of claims 1 to 11, the battery being configured to supply electrical energy.
